(19) **Europäisches Patentamt**

**European Patent Office**

**Office européen des brevets**

(11) Veröffentlichungsnummer : **0 150 824 B1**

(12) # EUROPÄISCHE PATENTSCHRIFT

(45) Veröffentlichungstag der Patentschrift :
**19.10.88**

(21) Anmeldenummer : **85100762.5**

(22) Anmeldetag : **25.01.85**

(51) Int. Cl.⁴ : **F 16 F 13/00, B 60 K 5/12**

(54) **Zweikammer-Motorlager mit hydraulischer Dämpfung.**

(30) Priorität : **26.01.84 DE 3402715**

(43) Veröffentlichungstag der Anmeldung :
**07.08.85 Patentblatt 85/32**

(45) Bekanntmachung des Hinweises auf die Patenterteilung : **19.10.88 Patentblatt 88/42**

(84) Benannte Vertragsstaaten :
**DE FR GB IT SE**

(56) Entgegenhaltungen :
**EP-A- 0 038 062**
**EP-A- 0 068 395**
**EP-A- 0 098 331**
**EP-A- 0 133 588**
**EP-A- 0 149 080**
**DE-A- 3 019 337**
**DE-U- 1 805 392**
**GB-A- 2 132 311**
**US-A- 4 159 091**
**PATENTS ABSTRACTS OF JAPAN, Band 7, Nr. 165**
**(M-230)(1310), 20. Juli 1983; & JP - A - 58 72741**
**(TOYOTA JIDOSHA KOGYO K.K.) 30.04.1983**

(73) Patentinhaber : **METZELER Gesellschaft mit beschränkter Haftung**
**Gneisenaustrasse 15**
**D-8000 München 50 (DE)**

(72) Erfinder : **Hofmann, Manfred**
**Gerhard von Dietz-Strasse 15**
**D-6257 Hünfelden 1 (DE)**
Erfinder : **Müller, Hans**
**Ringstrasse 24**
**D-5410 Höhr-Grenzhausen (DE)**

(74) Vertreter : **Michelis, Theodor, Dipl.-Ing.**
**Gneisenaustrasse 15**
**D-8000 München 50 (DE)**

## Beschreibung

Die Erfindung betrifft ein Zweikammer-Motorlager mit hydraulischer Dämpfung, dessen flüssigkeitsgefüllte und gummielastische Umfangswände aufweisende Kammern über einen in einer Zwischenplatte vorgesehenen, wendelförmig verlaufenden Kanal, dessen Länge ein Vielfaches seines Durchmessers beträgt, miteinander in Verbindung stehen.

Ein derartiges Motorlager ist beispielsweise aus der DE-A-30 19 337 bekannt. Der Vorteil eines derartigen wendelförmigen und damit im Verhältnis zum Durchmesser sehr langen Kanals besteht darin, daß die in dem Kanal eingeschlossene Flüssigkeitssäule praktisch als Tilgermasse wirkt und bei Schwingungen großer Amplitude und geringer Frequenz eine ausgezeichnete Dämpfung bewirkt. Die größte Dämpfung tritt dann auf, wenn die im Kanal eingeschlossene Flüssigkeitssäule in Resonanz zur Erregerfrequenz kommt. Um die absoluten Dämpfungswerte bei derartigen Lagern zu erhöhen, ist es üblich, diese Kanäle immer länger auszubilden. Die Maximalwerte der Dämpfung sind dabei jedoch auch bei unterschiedlichen Amplituden weitgehend frequenzunabhängig. Dies hat bei einigen Anwendungen den Nachteil, daß beispielsweise bei einer Abstimmung der Maximaldämpfung auf die Vertikaleigenresonanz des Motors im Bereich von etwa 8-12 Hz bei höheren Frequenzen im Bereich von etwa 15-30 Hz nur noch wenig Dämpfung vorhanden ist.

Darüber hinaus ist es aus der JP-A-58 072 741 bekannt, zwei die Zwischenplatte senkrecht durchsetzende Kanäle unterschiedlichen Querschnitts vorzusehen, wodurch sich zwei Dämpfungsmaxima bei unterschiedlichen Frequenzen ergeben, die sich teilweise überlappen. Diese Dämpfung erfolgt auch bei unterschiedlichen Amplituden bei der jeweils gleichen Frequenz, wenn auch mit unterschiedlicher Stärke. Eine echte Breitbandigkeit der Dämpfung ist damit jedoch nicht zu erreichen.

Der vorliegenden Erfindung liegt demgegenüber die Aufgabe zugrunde, ein Motorlager zu schaffen, mit dem eine breitbandige Dämpfung aller auftretenden Amplituden möglich ist.

Zur Lösung dieser Aufgabe ist erfindungsgemäß vorgesehen, daß die Zwischenplatte zusätzlich zum Kanal großer Länge eine oder mehrere, die Zwischenplatte senkrecht durchsetzende Düsen aufweist, die dem wendelförmigen Kalal hydraulisch parallelgeschaltet sind und daß das Verhältnis der Längen von wendelförmigen Kanal und Düse 6-20 und das Verhältnis der eingeschlossenen Volumina 10-500, insbesondere 50-200, betragen.

Durch diese zusätzliche Anordnung einer kurzen Düse parallel zu einem langen Kanal wird eine Breitbandigkeit dadurch erreicht, daß die Dämpfungsmaxima einmal verbreitert und zum anderen zu Frequenzen verschoben werden, bei denen die jeweils zu dämpfenden Schwingungsamplituden üblicherweise auftreten. Da bei Kraftfahrzeugen die Amplituden mit zunehmender Frequenz abnehmen, hat eine derartige Ausgestaltung zur Folge, daß das Motorlager im Fahrzeug breitbandig alle Amplituden abdämpft.

Zur optimalen und dennoch einfachen Gestaltung ist es zweckmäßig, wenn die Zwischenplatte zweiteilig ausgebildet ist und aus einem außenliegenden, plattenförmigen Haltering mit einer zylindrischen zentralen Einsenkung und einer in die Einsenkung eingesetzten angenähert T-förmigen Düsenscheibe besteht, derart, daß der äußere Rand der Düsenscheibe auf der Oberseite des Halteringes aufsitzt und zwischen dem kleineren Außendurchmesser der Düsenscheibe und dem Durchmesser der Einsenkung des Halterings der wendelförmige Kanal mit einer Einlaßöffnung im überstehenden Rand der Düsenscheibe und einer Auslaßöffnung in der die Einsenkung begrenzenden Bodenplatte des Halteringes gebildet ist. Dabei kann die Düse als senkrechte, zentrale Durchgangsbohrung in der Düsenscheibe ausgebildet sein.

Anhand einer schematischen Zeichnung sind Aufbau und Wirkungsweise eines Ausführungsbeispiels nach der Erfindung näher erläutert. Dabei zeigen :

Fig. 1 einen Längsschnitt durch das Motorlager,

Fig. 2 einen Querschnitt durch die Zwischenplatte, entsprechend der Schnittlinie II-II,

Fig. 3 ein Diagramm der Dämpfung für ein Motorlager allein mit einem wendelförmigen Kanal und

Fig. 4 ein Dämpfungsdiagramm für ein Motorlager mit wendelförmigem Kanal und kurzer Düse.

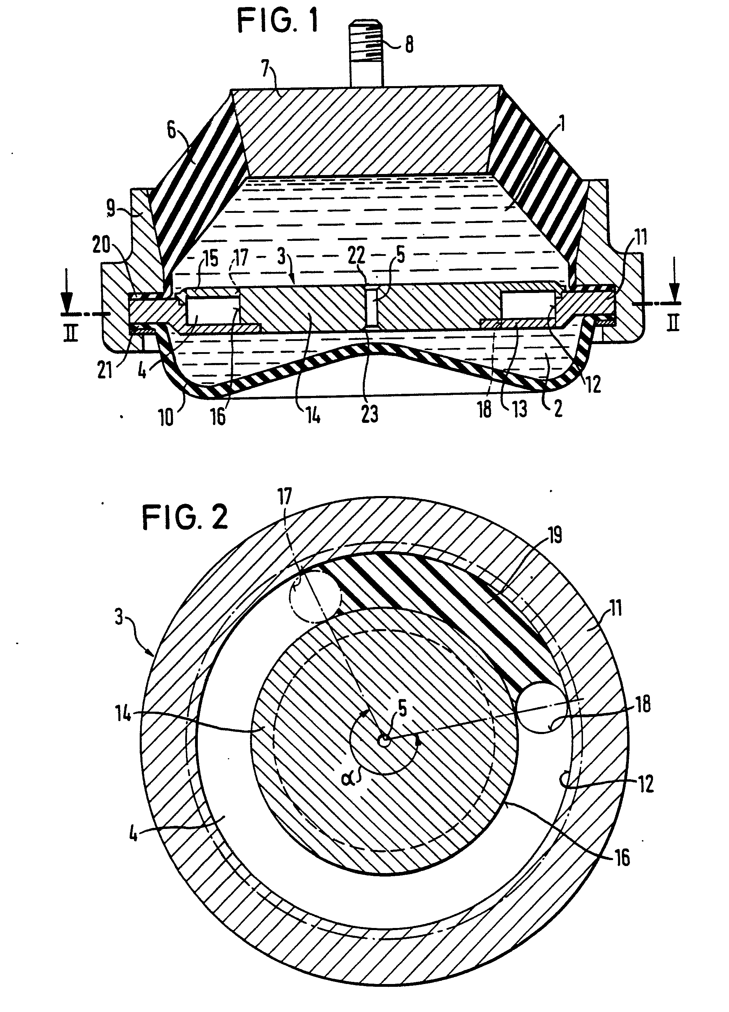

Wie aus Fig. 1 zu ersehen ist, besteht das Motorlager im wesentlichen aus einer oberen motorseitigen Kammer 1 und einer unteren Kammer 2, die durch einen in der noch zu beschreibenden Zwischenplatte 3 verlaufenden, angenähert wendelförmigen Kanal 4 und die Düse 5 hydraulisch miteinander verbunden sind. Die obere Kammer 1 wird von einer starkwandigen hohlkegelförmigen Kammerwandung 6 aus einem gummielastischen Material gebildet, die an der oberen Stirnseite von einer motorseitigen Lagerplatte 7 mit einem Haltebolzen 8 zum Anschluß an den Motor und im unteren Bereich mit dem Halteflansch 9 zum Anschluß an ein nicht näher dargestelltes Widerlager und die Fahrzeugkarosserie haftend verbunden ist. Die untere Kammer 2 wird von einer beispielsweise tassenförmigen Kammerwandung 10 aus ebenfalls gummielastischem, jedoch weicherem Material gebildet, die mit dem Flansch 9 haftend verbunden ist.

Beide Kammern 1 und 2 sind mit einer hydraulischen Flüssigkeit, im allgemeinen einer Mischung als Glykol und Wasser, gefüllt.

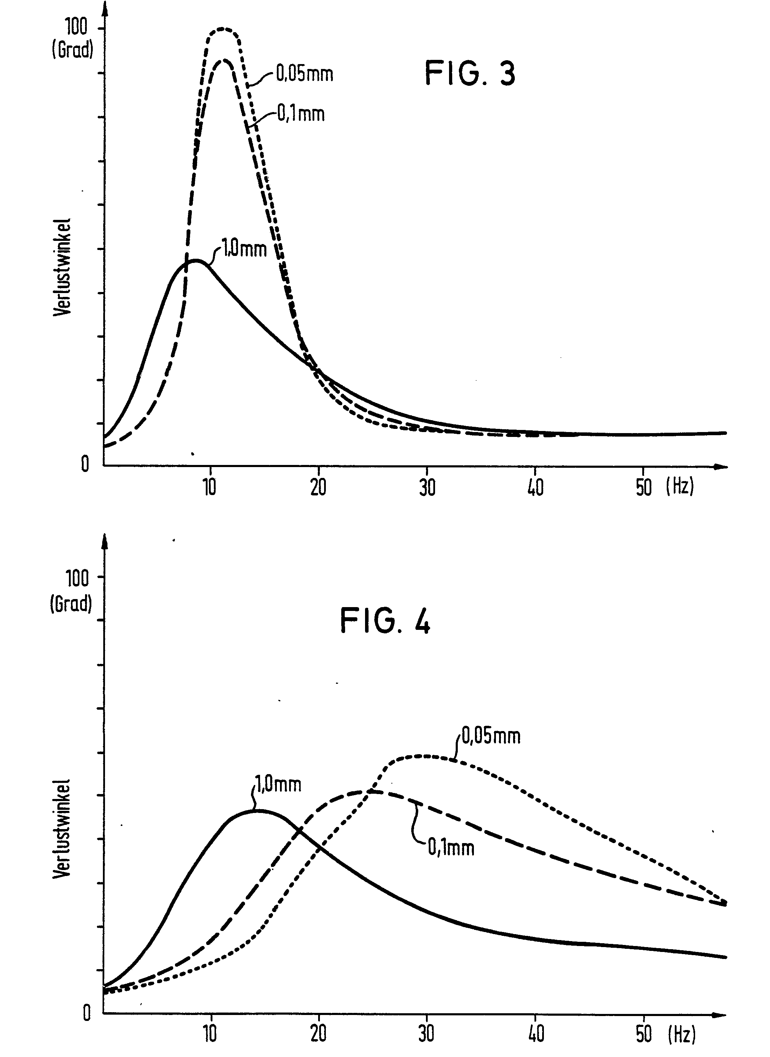

Die Zwischenplatte 3 ist erfindungsgemäß zweiteilig ausgebildet und besteht aus einem außenliegenden plattenförmigen Haltering 11 mit einer zylindrischen zentralen Einsenkung 12 derart,

daß eine ringförmige Bodenplatte 13 stehenbleibt. In die Einsenkung 12 ist eine angenähert T-förmige Düsenscheibe 14 eingesetzt, deren äußerer Rand 15 auf der Oberseite des Halteringes 11 aufsitzt. Zwischen dem innenliegenden Außendurchmesser 16 der Düsenscheibe 14 und dem Durchmesser der Einsenkung 12 des Halteringes 11 wird dabei der Kanal 4 gebildet, der — wie insbesondere aus Fig. 2 zu ersehen ist — eine Einlaßöffnung 17 im überstehenden Rand 15 der Düsenscheibe und eine Auslaßöffnung 18 zur unteren Kammer 2 in der die Einsenkung 12 begrenzenden Bodenplatte 13 aufweist.

Die Düse 5 ist dabei als senkrechte zentrale Durchgangsbohrung in der Düsenscheibe 14 ausgebildet und kann die Form eines Kreiskanals mit konisch erweitertem Einlauf 22 und Auslauf 23 aufweisen.

Wie insbesondere aus Fig. 2 zu ersehen ist, erstreckt sich der Kanal 4 im allgemeinen je nach Anforderungen an die gewünschte Dämpfung nur über einen Umfangswinkel α des Lagers. Es ist dabei möglich, entweder nur diesen Umfangsbereich α für den Kanal 4 im Haltering 11 und/oder der Düsenscheibe 14 auszuarbeiten, oder aber einen umlaufenden Ringraum zu bilden, der lediglich in dem nicht zu benutzenden Ringabschnitt 360°-α zwischen Auslaßöffnung 18 und Einlaßöffnung 17 mit einem hinreichend starren Material 19, beispielsweise einem Kunststoff oder einem Elastomeren, ausgefüllt und verschlossen wird.

Durch die beschriebene Ausgestaltung der Zwischenplatte 3 ist einmal eine leichte Anpassung an gewünschte Dimensionen des Kanals 4 sowohl hinsichtlich seines Durchmessers als auch seiner Länge möglich, sowie ein leichtes Einbringen der Düse 5 ohne Passungsschwierigkeiten oder Querschnittsveränderungen, die bei den bisher üblichen, über den gesamten Querschnitt zweigeteilten Zwischenplatten, auftreten konnte.

Zweckmäßigerweise sollten das Verhältnis der Längen von Kanal 4 und Düse 5 1-20 und das Verhältnis der eingeschlossenen Volumina 10-500 betragen, wobei sich für das Längenverhältnis Werte um 6 bis 10 und für das Volumenverhältnis Werte um 50-200 als besonders vorteilhaft erwiesen haben.

Zweckmäßig ist es darüber hinaus noch, die Zwischenplatte 3 in ihrem peripheren Bereich innerhalb des Halteflansches 9 durch einbezogene Gummiauskleidungen 20 und 21 elastisch zu lagern, so daß sie bei vom zu lagernden Motor angeregten Schwingungen hoher Frequenz und kleiner Amplitude mitschwingen kann, ohne daß ein Flüssigkeitsaustausch zwischen den beiden Kammern 1 und 2 erfolgt. Dadurch ist eine gute akustische Isolierung gewährleistet, so daß eine Körperschallübertragung vom Motor auf die Fahrzeugkarosserie weitgehend unterbunden wird.

Die Wirkung der erfindungsgemäßen Ausbildung der Zwischenplatte sei anhand der beiden folgenden Diagramme erläutert.

In Fig. 3 ist der Verlustwinkel über der Frequenz für eine Zwischenplatte mit nur einem herkömmlichen langen Kanal 4, der ein relativ großes Flüssigkeitsvolumen einschließt, aufgetragen. Dabei zeigt sich — wie bereits in der Einleitung ausgeführt —, daß die Maximalwerte der Dämpfung auch bei unterschiedlichen Amplituden weitgehend frequenzunabhängig sind, d. h. die Maximalwerte liegen hierbei bei Amplituden zwischen 1,0 und 0,05 mm jeweils etwa zwischen 10 und 15 Hz, wobei bei höheren Frequenzen ein rapider Abfall der Dämpfungswirkung auftritt.

Durch die Parallelschaltung der kurzen Düse 5 mit dem relativ langen Kanal 4 ergibt sich demgegenüber eine Dämpfung, wie sie aus Fig. 4 ersichtlich ist. Danach verschieben sich mit kleiner werdender Amplitude die Dämpfungsmaxima nach rechts in Bereiche höherer Frequenzen. Da bei Kraftfahrzeugen im allgemeinen die Schwingungsamplituden mit zunehmender Frequenz abnehmen, ergibt sich hiermit, daß das erfindungsgemäße Motorlager im Bereich beispielsweise von 12-40 Hz für die dabei auftretenden Amplituden eine optimale Dämpfung aufweist.

Selbstverständlich ist das erfindungsgemäße Grundprinzip der Parallelschaltung eines langen Kanals und einer kurzen Düse nicht an die beschriebene Konfiguration der Zwischenplatte gebunden, sondern diese stellt nur eine mögliche, jedoch besonders zweckmäßige Ausgestaltung dar.

## Patentansprüche

1. Zweikammer-Motorlager mit hydraulischer Dämpfung, dessen flüssigkeitsgefüllte und gummielastische Umfangswände (6, 10) aufweisende Kammern (1, 2) über einen, in einer Zwischenplatte (3) vorgesehenen, wendelförmig verlaufenden Kanal (4), dessen Länge ein Vielfaches seines Durchmessers beträgt, miteinander in Verbindung stehen, dadurch gekennzeichnet, daß die Zwischenplatte (3) zusätzlich zum Kanal (4) großer Länge eine oder mehrere, die Zwischenplatte (3) senkrecht durchsetzende Düsen (5) aufweist, die dem wendelförmigen Kanal (4) hydraulisch parallelgeschaltet sind und daß das Verhältnis der Längen von wendelförmigem Kanal (4) und Düse (5) 6-20 und das Verhältnis der eingeschlossenen Volumina 10-500, insbesondere 50-200, betragen.

2. Zweikammer-Motorlager nach Anspruch 1, dadurch gekennzeichnet, daß die Düse (5) als Kreiskanal mit konisch erweitertem Einlauf (22) und Auslauf (23) ausgebildet ist.

3. Zweikammer-Motorlager nach Anspruch 1, dadurch gekennzeichnet, daß die Zwischenplatte (3) zweiteilig ausgebildet ist und aus einem außenliegenden, plattenförmigen Haltering (11) mit einer zylindrischen, zentralen Einsenkung (12) und einer in die Einsenkung (12) eingesetzten, angenähert T-förmigen Düsenscheibe (14) besteht, derart, daß der äußere Rand (15) der Düsenscheibe (14) auf der Oberseite des Halteringes (11) aufsitzt, und zwischen dem kleineren Außendurchmesser (16) der Düsenscheibe (14) und dem Durchmesser der Einsenkung (12) des Halterings (11) der wendelförmige Kanal (4) mit einer Einlaßöffnung (17) im überstehenden Rand (15) der Düsenscheibe (14) und einer Auslaßöffnung (18) in der die Einsenkung (12) begrenzenden Bodenplatte (13) des Halterings (11) gebildet ist.

4. Zweikammer-Motorlager nach Anspruch 3, dadurch gekennzeichnet, daß die Düse (5) als senkrechte, zentrale Durchgangsbohrung in der Düsenscheibe (14) ausgebildet ist.

5. Zweikammer-Motorlager nach Anspruch 3, dadurch gekennzeichnet, daß der Kanal (4) durch einen umlaufenden Ringraum zwischen Düsenscheibe (14) und Haltering (11) gebildet und ein Ringabschnitt zwischen Auslaßöffnung (18) und Einlaßöffnung (17) mit einem starren Material (19) ausgefüllt ist.

## Claims

1. Two-chamber engine bearing with hydraulic damping, of which the fluid-filled chambers (1, 2) having elastomeric peripheral walls (6, 10) are in communication with one another via a helically extending channel (4) which is provided in an intermediate plate (3) and the length of which amounts to a multiple of its diameter, characterized in that the intermediate plate (3) has, in addition to the channel (4) of great length, one or more nozzles (5) which pass perpendicularly through the intermediate plate (3) and which are connected hydraulically in parallel to the helical channel (4), and in that the ratio of the lengths of the helical channel (4) and nozzle (5) is 6-20 and the ratio of the enclosed volumes is 10-500, especially 50-200.

2. Two-chamber engine bearing according to Claim 1, characterized in that the nozzle (5) is designed as a circular channel with a conically widened inflow (22) and outflow (23).

3. Two-chamber engine bearing according to Claim 1, characterized in that the intermediate plate (3) is made in two parts and consists of an outer, plateshaped retaining ring (11) with a cylindrical, central recess (12) and an approximately T-shaped nozzle disc (14) inserted into the recess (12), in such a way that the outer edge (15) of the nozzle disc (14) rests on the top of the retaining ring (11), and between the smaller outside diameter (16) of the nozzle disc (14) and the diameter of the recess (12) of the retaining ring (11), the helical channel (4) is formed with an inlet orifice (17) in the projecting edge (15) of the nozzle disc (14) and an outlet orifice (18) in the base plate (13), limiting the recess (12), of the retaining ring (11).

4. Two-chamber engine bearing according to Claim 3, characterized in that the nozzle (5) is designed as a vertical, central passage bore in the nozzle disc (14).

5. Two-chamber engine bearing according to Claim 3, characterized in that the channel (4) is formed by an encircling annular space between nozzle disc (14) and retaining ring (11), and a ring segment between the outlet orifice (18) and the inlet orifice (17) is filled with a rigid material (19).

## Revendications

1. Support de moteur à deux chambres présentant un amortissement hydraulique et dont les chambres (1, 2), qui comportent des parois périphériques (6,10) remplies par un liquide et présentant l'élasticité du caoutchouc, sont reliées entre elles par l'intermédiaire d'un canal spiralé (4) qui est prévu dans une plaque intermédiaire (3) et dont la longueur est égale à un multiple de son diamètre, caractérisé par le fait que la plaque intercalaire (3) comporte, en plus du canal (4) de grande longueur, une ou plusieurs buses (5) qui traversent perpendiculairement la plaque intermédiaire (3) et sont branchées en parallèle, du point de vue hydraulique, avec le canal spiralé (4), et que le rapport des longueurs du canal spiralé (4) et des buses (5) est égal à 6-20 et que le rapport des volumes enfermés est égal à 10-500 et notamment à 50-200.

2. Support de moteur à deux chambres suivant la revendication 1, caractérisé par le fait que la buse (5) est agencée sous la forme d'un canal circulaire possédant une entrée (22) et une sortie (23) possédant des formes élargies coniques.

3. Support de moteur à deux chambres suivant la revendication 1, caractérisé par le fait que la plaque intermédiaire (3) est formée de deux éléments et est constituée par une bague de retenue extérieure (11) en forme de plaque comportant un renfoncement central cylindrique (12) et par un disque porte-buse (14) approximativement en forme de T, inséré dans le renfoncement (12), de telle sorte que le bord extérieur (15) du disque porte-buse (14) prend appui sur la face supérieure de la bague de retenue (11), et qu'entre le diamètre extérieur plus petit (16) du disque porte-buse (4) et le diamètre du renfoncement (12) de la bague de retenue (11) se trouve ménagé le canal spiralé (4) qui comporte une ouverture d'admission (17) ménagée dans le rebord saillant (15) du disque porte-buse (14) et une ouverture de sortie (18) ménagée dans la plaque de base (13) délimitant le renfoncement (12), de la bague de retenue (11).

4. Support de moteur à deux chambres selon la revendication 3, caractérisé par le fait que la buse (5) est réalisée sous la forme d'un perçage central traversant et perpendiculaire ménagé dans le disque porte-buse (14).

5. Support de moteur à deux chambres suivant la revendication 3, caractérisé par le fait que le canal (4) est formé par un espace annulaire périphérique situé entre le disque porte-buse (14) et la bague de retenue (11), et qu'une section annulaire présente entre l'ouverture de sortie (18) et l'ouverture d'admission (17) est remplie par un matériau rigide (19).

0 150 824

# FIG. 1

# FIG. 2

1

FIG. 3

FIG. 4